# EUROPEAN PATENT APPLICATION

(11) **EP 1 323 800 A2**
(43) Date of publication of application: **02.07.2003**
(21) Application number: 02258993.1
(22) Date of filing: 27.12.2002
(51) Int. Cl.: C09J 7/00, B32B 27/40, A43B 9/12

(54) **Coextruded adhesive film to bond non-polar soles to polar uppers**

(30) Priority: 28.12.2001 US 34422
(71) Applicant: WORTHEN INDUSTRIES INC., Nashua, NH 03060 (US)
(72) Inventor: Sasongko, Sun, Medford, Massachusetts 02155 (US)
(74) Representative: Lambrinos, Matthew Franklin

(57) **Abstract**

A laminated adhesive film for bonding non-polar materials to polar materials in footwear assemblies which comprises an inner thermoplastic polyurethane based adhesive adapted to bond to a polar material and an outer ethylene copolymer based adhesive adapted to bond to a non-polar material. The outer adhesive is interfaced with the inner adhesive.

## Description

### Background of the Invention

### Field of the Invention

The invention relates to a coextruded adhesive film used to bond non-polar to polar materials in footwear assemblies.

### Description of the Relevant Art

In the manufacture of footwear assemblies, ultimately a sole is attached to an upper. Almost without exception adhesives are used, and in the high end footwear assemblies, the upper is also stitched to the sole either directly or through an intermediate construction. In addition to adhesion, sealing the interface between the sole and the upper is also a consideration.

A major segment of footwear assembly is bonding non-polar soles to polar uppers. Bonding a polar material, such as polyolefinic upper to a non-polar substrate such as a sole has always been an inherent problem in the industry. Typically, the problem is solved by priming, UV treating or corona treating the non-polar sole prior to applying an adhesive such as a urethane adhesive. Whether the urethane is applied as a liquid or a film, the primers used are solvent based products that emit hazardous materials into the atmosphere and require energy to dry. The treatments are fugitive, they have limited shelf life and are easily rendered useless by surface contamination.

It is known to use a urethane film having a liquid, solvent-based primer which has been applied by gravure coater and then dried tack free. This coated film, primer side down, is then molded into the sole leaving the urethane on the surface to subsequently bond to a mid-sole, an upper or an upper adhesive film, see U.S. Pat. No. 5,820,719.

### Brief Summary of the Invention

Broadly, the invention comprises a thermoplastic urethane film adhesive having a functionalized ethylene copolymer adhesive bonded thereto. The two adhesives are preferably coextruded to form a coextrudate. The coextrudate can bond a non-polar material to a polar material. The ethylene copolymer is bonded to the non-polar material while the thermoplastic polyurethane is bonded to the polar material.

The coextrudate is preferably used in footwear manufacture for bonding soles to uppers and meets or exceeds the published standards of SATRA (Shoe & Allied Trade Research Association) for sole-attaching adhesives, specifically SATRA TM409, Heat resistance/heat aging of sole bonds in complete footware; SATRA TM92, Resistance to Footwear Flexing; and SATRA TM411 Peel strength of footwear.

### Brief Description of the Drawing(s)

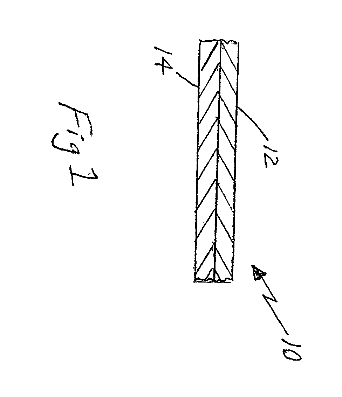

Fig.1 is an illustration of a coextrudate of the invention.

### Description of the Preferred Embodiment(s)

In the present invention, one adhesive is preferably an ethylene copolymer based adhesive and the outer adhesive is preferably a thermoplastic polyurethane based adhesive. The thermoplastic outer adhesive bonds to a polar material. The ethylene copolymer based adhesive bonds to a non-polar material. The adhesives may be applied singly or as a coextrusion by nip roller, spraying as a film, etc.

### Example

A thermoplastic polyurethane elastomer, e.g. Morthane® CA116 Huntsman, is coextruded in a thickness of between about 0.0005" to 0.005" with an anhydride modified ethylene vinyl acetate, e.g. Bynel® Series 3800, and specifically Bynel® E418, or Fusabond® C Series, specifically MC 190D, DuPont, in a thickness of between 0.0005" to 0.005" and laminated to form a coextrudate.

As shown in Fig. 1, the coextrudate 10 comprises a thermoplastic polyurethane layer 12 and an anhydride modified ethylene vinyl acetate layer 14.

Adhesives include the following extrudate combinations: acid modified ethylene vinyl acetate/thermoplastic polyurethane; acid modified acrylic acetate/thermoplastic polyurethane or acrylic modified polyurethane; acrylic or acid modified acetate/thermoplastic polyurethane; acrylic or acid modified acrylic acids/polyesters; acid or anhydride modified polyolefins/thermoplastic polyurethanes or acrylate modified polyurethanes or acid or anhydride modified polyolefins or acid or anhydride modified acrylic acids/thermoplastic polyurethane or acrylate modified polyurethanes. Specifically, the following sole material/inner adhesive/outer adhesive/upper combinations are believed to be suitable for purposes of the invention.

| Sole Material | Inner Adhesive | Outer Adhesive | Upper |
|---|---|---|---|
| Phylon or EVA | acid or anhydride modified EVA | thermoplastic polyurethane | leather |
| Phylon or EVA | acid modified acrylic | thermoplastic polyurethane or polyurethane acrylate | leather |
| EPDM polymers or copolymers | acid or anhydride modified polyolefins | thermoplastic polyurethane or polyurethane acrylate | leather or fabric |
| Rubber | acid or anhydride modified acrylics | thermoplastic polyurethane, polyurethane acrylates, or polyesters | leather or fabric |

Although described with reference to specific thermoplastic polyurethane adhesives and ethylene copolymer based adhesives, other polymers of ethylenically unsaturated compounds and polymers having -CO-0- and -CO-NH- linkages can be used. Suitable adhesives include thermoplastic polyurethane blends and polyesters or polyamides.

## Claims

1. A laminated adhesive film for bonding non-polar materials to polar materials in footwear assemblies which comprises:
an inner thermoplastic polyurethane based adhesive adapted to bond to a polar material; and
an outer ethylene copolymer based adhesive adapted to bond to a non-polar material, the outer adhesive being interfaced with the inner adhesive.

2. An adhesive film according to claim 1 wherein the inner adhesive is selected from acid modified acrylic acetates, acrylic or acid modified acetates, acrylic or acid modified acrylic acids, acid or anhydride modified polyolefins, acid or anhydride modified polyolefins and acid or anhydride modified acrylic acids.

3. An adhesive film according to claim 2 wherein the outer adhesive is selected from thermoplastic polyurethanes, acrylic modified polyurethanes and acrylate modified polyurethanes.

4. An adhesive film according to any preceding claim wherein the polar material is an upper.

5. An adhesive film according to claim 4 wherein the non-polar material is a sole.

6. An adhesive film according to any preceding claim wherein the polar material comprises leather or fabric.

7. An adhesive film according to claim 6 wherein the non-polar material is selected from ethylene copolymers, Phylon, EVA, EPDM polymers, EPDM copolymers and rubber.

8. An adhesive film according to claim 6 or claim 7 wherein the polar material is leather, the inner adhesive comprises acid or anhydride modified EVA, the outer adhesive comprises thermoplastic polyurethane and the non-polar material is EVA.

9. An adhesive film according to any preceding claim **characterised in that** it meets or exceeds SATRA standard TM409, TM92 and TM411 when the inner adhesive is bonded to a polar material and the outer adhesive is bonded to a non-polar material.

10. An adhesive film according to any preceding claim wherein the outer and inner adhesives each have a thickness in the range of 12.7 to 127 µm (0.0005 to 0.005 inches).
